# EUROPEAN PATENT SPECIFICATION

(11) **EP 3 443 037 B1**
(45) Date of publication and mention of the grant of the patent: **16.02.2022**
(21) Application number: 17712169.6
(22) Date of filing: 24.03.2017
(51) Int. Cl.: C08L 33/12, C08L 51/04, C08F 265/06

(54) **POLYMER COMPOSITION COMPRISING POLY(METHYL METHACRYLATE) AND AN IMPACT MODIFIER COMPOSITION**
POLYMERZUSAMMENSETZUNG ENTHALTEND POLY(METHYLMETHACRYLAT) UND SCHLAGFESTIGKEIT MODIFIZIERUNGSMITTEL
COMPOSITION POLYMÈRE COMPRENANT DU POLY(MÉTHACRYLATE DE MÉTHYLE) ET DES MODIFICATEUR D'IMPACT

(30) Priority: 12.04.2016 EP 16164895
(43) Date of publication of application: 20.02.2019
(73) Proprietor: SABIC Global Technologies B.V., 4612 PX Bergen op Zoom (NL)
(72) Inventor: SYED, Tariq, 6160 GA Geleen (NL); SOMASUNDARAM, Elango, 6160 GA Geleen (NL); AL-HUSSAIN, Saad, N., 6160 GA Geleen (NL)
(74) Representative: Sabic Intellectual Property Group
(86) International application number: PCT/EP2017/057082
(87) International publication number: WO 2017/178210

(56) References cited:
- EP-A1- 0 745 622
- US-A1- 2005 013 962
- US-A1- 2014 187 704

## Description

The present invention relates to a polymer composition, and in particular to a transparent, impact-modified poly(methyl methacrylate) composition, methods of manufacture, and uses thereof.

Poly(methyl methacrylate) (PMMA) is widely used due to its excellent transparency and weatherability, as well as superior hardness, chemical resistance, and surface gloss. Due to its transparency, PMMA is often used as a lightweight or shatter- resistant alternative to glass. However, unmodified PMMA can be brittle under impact, and is more prone to scratching than is glass. The addition of impact modifiers can improve the impact strength of PMMA, but may not provide sufficient improvement or may cause loss of other desirable properties such as transparency.

Thus, there is a need for polymer compositions comprising PMMA which have improved impact strength yet retain transparency.

This has now been achieved according to the present invention by a polymer composition comprising:
- 60.0 to 95.0 weight percent of a poly(methyl methacrylate);
- 5.0 to 40.0 weight percent of an impact modifier composition comprising a first impact modifier and a second impact modifier different from the first impact modifier
wherein the amount of the poly(methyl methacrylate) and the impact modifier composition totals 100.0 weight percent
wherein
- the first impact modifier comprises a core which is surrounded by a first shell which in turn is surrounded by a second shell, wherein
   - the core comprises a butyl acrylate polymer;
   - the first shell comprises a butyl acrylate polymer; and
   - the second shell comprises ≥ 50.0 wt% of a methyl methacrylate polymer with regard to the total weight of the second shell;
   and
- the second impact modifier comprises a core which is surrounded by a first shell which in turn is surrounded by a second shell, wherein
   - the core comprises a methyl methacrylate polymer;
   - the first shell comprises a butyl acrylate polymer; and
   - the second shell comprises ≥ 50.0 wt% of a methyl methacrylate polymer with regard to the total weight of the second shell.

Such polymer composition has a desired good impact strength. Such polymer composition also retains a desired transparency.

In the context of the present invention, the impact strength may be determined as the notched Izod impact strength, such as the notched Izod impact strength as determined according to ASTM D256-10 measured at +23°C on a molded bar of 3.2 mm thickness.

In the context of the present invention, the transparency may be determined as the total transmittance, such as determined in accordance with ASTM D1003-00.

Impact modifier compositions comprising methyl methacrylate polymers are described in US2014/187704A1, US2005/013962A1, and EP745662A1. US2014/187704A1 describes a composition comprising a copolymer of methyl methacrylate and methyol acrylate, a first impact modifier comprising a buryl acrylate / butadiene - based core and a methyl methacrylate polymer shell, and a second impact modifier comprising a butyl acrylate - styrene core and a methyl methacrylate polymer shell. US2005/013962A1 describes a composition comprising a methyl methacrylate / ethyl acrylate copolymer and an impact modifier comprising a methyl methacrylate / allyl methacrylate core, a first shell form from butyl acrylate, allyl acrylate and styrene, and a second shell from methyl acylate and ethyl acrylate. EP745662A1 describes a composition comprising PMMA and an impact modifier having a methyl methacrylate / butyl acrylate / allyl methacrylate core, a butyl acrylate / styrene / allyl methacrylate first shell, and a methyl methacrylate / butyl acrylate second shell.

Alternatively, the invention also relates to a polymer composition comprising
- 70.0 to 95.0, alternatively 75.0 to 90.0, alternatively 80.0 to 90.0, weight percent of the poly(methyl methacrylate); and
- 5.0 to 30.0, alternatively 10.0 to 25.0, alternatively 10.0 to 20.0 weight percent of the impact modifier composition
wherein the amount of the poly(methyl methacrylate) and the impact modifier composition totals 100.0 weight percent.

It is further preferred that the weight ratio of the first impact modifier to the second impact modifier is from 0.5:1.0 to 2.0:1.0, alternatively from 0.8:1.0 to 1.5:1.0.

A method of making the above-described polymer composition includes melt blending poly(methyl methacrylate) with the impact modifier composition and optionally with other components.

A shaped article includes the above-described impact-modified poly(methyl methacrylate) composition.

The use of the two different impact modifiers as described herein provide transparent PMMA compositions having a synergistic improvement in impact strength compared to compositions with either impact modifier alone.

Poly(methyl methacrylates) that can be used in the polymer compositions according to the present invention can be generally obtained via free-radical polymerization of mixtures comprising methyl methacrylate. These mixtures generally comprise at least 70 weight percent (wt%), preferably at least 80 wt%, and particularly preferably at least 90 wt%, of methyl methacrylate, based on the total weight of the monomers in the composition, with the remainder of the composition being other copolymerizable monomers. where the percentages by weight give a total of 100% by weight. In some embodiments, no monomers other than methyl methacrylate monomers are present.

Monomers co-polymerizable with methyl methacrylate include other (meth)acryl compounds, in particular other (C₁₋₃₂ alkyl) (meth)acrylates copolymerizable with methyl methacrylate. Examples of such monomers include (meth)acrylates derived from saturated alcohols, for example methyl acrylate, ethyl (meth)acrylate, propyl (meth)acrylate, n-butyl (meth)acrylate, tert-butyl (meth)acrylate, pentyl (meth)acrylate, and 2-ethylhexyl (meth)acrylate; (meth)acrylates derived from unsaturated alcohols, for example oleyl (meth)acrylate, 2-propynyl (meth)acrylate, allyl (meth)acrylate, and vinyl (meth)acrylate; aryl (meth)acrylates, such as benzyl (meth)acrylate or phenyl (meth)acrylate, where in each case the aryl radicals can be unsubstituted or have up to four substituents; cycloalkyl (meth)acrylates, such as 3-vinylcyclohexyl (meth)acrylate, and bornyl (meth)acrylate; hydroxyalkyl (meth)acrylates, such as 3-hydroxypropyl (meth)acrylate, 3,4-dihydroxybutyl (meth)acrylate, and 2-hydroxyethyl (meth)acrylate, 2-hydroxypropyl (meth)acrylate; glycol di(meth)-acrylates, such as 1,4-butanediol (meth)acrylate, (meth)acrylates of ether alcohols, for example tetrahydrofurfuryl (meth)acrylate, and vinyloxyethoxyethyl (meth)acrylate; sulphur-containing (meth)acrylates, such as ethylsulphinylethyl (meth)acrylate, 4-thiocyanatobutyl (meth)acrylate, ethylsulphonylethyl (meth)acrylate, thiocyanatomethyl (meth)acrylate, methylsulphinylmethyl (meth)acrylate, and bis((meth)acryloyloxyethyl) sulphide; and polyfunctional (meth)acrylates, such as trimethyloylpropane tri(meth)acrylate. Amides of and nitrile derivatives of (meth)acrylic acid, for example N-(3-dimethylaminopropyl)-(meth)acrylamide and (meth)acrylonitrile can be used.

Other unsaturated monomers copolymerizable with methyl methacrylate include 1-alkenes, such as 1-hexene, 1-heptene, and butene; branched alkenes, such as vinylcyclohexane, 3,3-dimethyl-1-propene, 3-methyl-1-diisobutylene, and 4-methyl-1-pentene; vinyl esters, such as vinyl acetate; styrene, α-methylstyrene and α-ethylstyrene; substituted styrenes having a (C₁₋₄ alkyl) or halogen substituent on the ring, such as vinyltoluene, p-methylstyrene, mono-chlorostyrenes, dichlorostyrenes, tribromostyrenes, and tetrabromostyrenes; heterocyclic vinyl compounds, such as 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinyl-pyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles; vinyl and isoprenyl ethers; maleic acid derivatives, such as maleic anhydride, methylmaleic anhydride, maleimide, and methylmaleimide; and dienes, such as divinylbenzene. A combination comprising at least one the foregoing comonomers can be used.

A combination of different poly(meth)acrylates can be used, having, for example, different molecular weights or different monomeric units.

The weight average molecular weight (M_{w}) of the poly(methyl methacrylates) can vary within a wide range, the M_{w} usually being matched to the intended use and to the mode of processing of the composition. However, it can be generally in the range from 20,000 to 1,000,000 g/mol, preferably from 50,000 to 500,000 g/mol and particularly preferably from 80,000 to 300,000 g/mol. The weight average molecular weight may be determined in accordance with ASTM D5296-11.

The polymer compositions according to the present invention further comprise an impact modifier composition comprising two different impact modifiers, a first impact modifier such as for example a graft copolymer impact modifier, and a second impact modifier such as for example an acrylate impact modifier. The impact modifiers may for example be elastomer-modified copolymers. The impact modifiers may comprise a phase A such as an elastomeric (i.e., rubbery) polymer phase having a Tg less than 10°C, more specifically less than -10°C, or more specifically -40° to -80°C, and a phase B such as a rigid polymeric superstrate grafted to the elastomer phase.

Materials suitable for use as the phase A include elastomeric homopolymers of C₁₋₁₀ alkyl (meth)acrylates, and elastomeric copolymers of (C₁₋₁₀ alkyl) (meth)acrylates with butadiene, isoprene, styrene, alpha-methyl styrene, (C₁₋₄ alkyl)-substituted styrene, (meth)acrylonitrile, maleic acid anhydride, (C₁₋₄ alkyl) N-substituted maleimide, phenyl N-substituted maleimide, or a combination comprising at least one of the foregoing elastomer monomers. A combination of homopolymers and copolymers can be used. In the current invention, the phase A comprises a butyl acrylate polymer. For example, the phase A may comprise a butyl acrylate homopolymer or butyl acrylate copolymer with one or more of styrene, α-methyl styrene, (C₁₋₄ alkyl)-substituted styrene, or (meth)acrylonitrile. The phase A can be present in an amount of 20 to 80 wt%, based on the total weight of the impact modifier.

Materials suitable for use as the phase B include, for example, homopolymers and copolymers derived from monovinyl aromatic monomers such as styrene and alpha-methyl styrene, and monovinylic monomers such as (meth)acrylonitrile, (meth)acrylic acid, and the (C₁₋₆ alkyl) (meth)acrylates. In the current invention, the phase B comprises methyl methacrylate units. For example, the phase B may comprise a methyl methacrylate polymer. Phase B comprises ≥ 50.0 wt%, alternatively ≥ 70.0 wt%, alternatively ≥ 80.0 wt% of a methyl methacrylate polymer with regard to the total weight of the phase B. The phase B can be present in an amount of 20 to 80 wt%, based on the total weight of the impact modifier.

Preferably, the methyl methacrylate polymer has a weight average molecular weight of 20,000 to 1,000,000 g/mol, alternatively 50,000 to 500,000 g/mol, alternatively 100,000 to 300,000 g/mol, as determined in accordance with ASTM D5296-11.

In an embodiment, the present invention relates to a polymer composition wherein each of both the first and the second impact modifier comprises:
- a phase A comprising:
   - an elastomeric homopolymer of a C₁₋₁₀ alkyl (meth)acrylate;
   - an elastomeric copolymer of a (C₁₋₁₀ alkyl) (meth)acrylate with butadiene, isoprene, styrene, alpha-methyl styrene, (C₁₋₄ alkyl)-substituted styrene, (meth)acrylonitrile, maleic acid anhydride, (C₁₋₄ alkyl) N-substituted maleimide, phenyl N-substituted maleimide, or a combination thereof; or
   - a combination comprising at least one of the elastomeric homopolymer and the elastomeric copolymer;
   and
- a phase B comprising a homopolymer or a copolymer derived from a styrenic compound, (meth)acrylonitrile, (meth)acrylic acid, a (C₁₋₆ alkyl) (meth)acrylate, or a combination thereof.

Crosslinking agents having at least two ethylenically unsaturated groups can be used in either the phase A or phase B. Examples of crosslinking agents include allyl (meth)acrylate, 1,2-divinylbenzene, difunctional (meth)acrylates such as di(meth)acrylates of ethylene glycol, of diethylene glycol, of triethylene glycol, or of propylene glycol, 2,2'-bis[p-(γ-methacryloxy-β-hydroxypropoxy)phenylpropane] ("bis-GMA"), bisphenol A dimethacrylate, neopentyl glycol di(meth)acrylate, 2,2'-di(4-methacryloxypolyethoxy-phenyl)propane having from 2 to 10 ethoxy groups per molecule, and tri- or polyfunctional (meth)acrylates such as trimethylolpropane tri(meth)acrylate and pentaerythritol tetra(meth)acrylate.

In some embodiments, the first impact modifier before manufacture of the composition is opaque; and the second impact modifier before manufacture of the composition is transparent.

In the current invention, in both the first and second impact modifiers, the phase A and the phase B is present in a core-shell configuration having at least one core and at least one shell. The first and the second impact modifier each have a core-shell configuration comprising a core, which is surrounded by a first shell, which is surrounded by a second shell. In both the first and the second impact modifier, it is preferred that at least one elastomeric phase is present. The core may for example be elastomeric or rigid. The outer shell comprises a majority (greater than 50 weight percent (wt%)) of units derived from methyl methacrylate. In some embodiments, the outer shell comprises greater than 60 wt%, or greater than 70 wt%, or greater than 80 wt% of methyl methacrylate units. The shell(s) can physically encapsulate the core (or another shell), or the shell can be partially or essentially completely grafted to the core (or another shell).

The invention relates to a polymer composition wherein
- the first impact modifier comprises a core which is surrounded by a first shell which in turn is surrounded by a second shell, wherein
   - the core comprises a material of phase A;
   - the first shell comprises a material of phase A; and
   - the second shell comprises a material of phase B
   and
- the second impact modifier comprises a core which is surrounded by a first shell which in turn is surrounded by a second shell, wherein
   - the core comprises a material of phase B;
   - the first shell comprises a material of phase A; and
   - the second shell comprises a material of phase B.

Processes known for the formation of the foregoing core-shell impact modifiers include mass, emulsion, suspension, and solution processes, or combined processes such as bulksuspension, emulsion-bulk, bulk-solution, or other techniques, using continuous, semi-batch, or batch processes. In an embodiment the foregoing types of impact modifiers are prepared by an emulsion polymerization process, which can provide more uniform particle size.

The first impact modifier may be a graft copolymer in the form of core/shell particles. For example, the first impact modifier may be in the form of particles having a particle size from 100 to 1000 nanometers (nm), for example 150 to 500 nm, or 200 to 250 nm. The number average particle diameter of the first impact modifier can be 30 to 400 nm, and more preferably 40 to 300 nm. The particle size may be determined in accordance with In particular, the first impact modifier may have a core/shell/shell (C/S1/S2) structure wherein the weight ratio of C:(S1+S2) is 10-40:60-90. In the first impact modifier, the core (C) and the first shell or inner shell (S1) may for example be elastomeric, and the second shell or outer shell (S2) may be rigid.

The polymer of the core of the first impact modifier can comprise, based on its total weight, 40.0 to 99.9 wt%, or 55.0 to 90.0 wt%, of alkyl methacrylate repeat units or styrenic repeat units; 0 to 59.9 wt% of a copolymerizable monomer other than the alkyl methacrylate or styrenic repeat units; and 0.1 to 5.0 wt% of a polyfunctional monomer, where the percentages by weight give a total of 100% by weight.

The first shell or inner shell (S1) may comprise a material of phase A. To provide a transparent composition, the phase A preferably has a refractive index within ±0.005 of the polymethyl methacrylate, more preferably within ±0.001 of the polymethyl methacrylate. The first shell can comprise, based on its total weight, 50.0 to 99.9 wt%, preferably 70 to 99 wt% of a (C₂₋₈ alkyl) acrylate, 0 to 49.9 wt%, preferably 0 to 29 wt% of a copolymerizable vinyl monomer that is not an alkyl acrylate, and 0.1 to 10 wt%, preferably 0.1 to 5.0 wt% of a polyfunctional monomer. Polymerization of the monomers for the first shell in the presence of the core polymers may result in the core polymer being mainly distributed at the center portion of the first impact modifier.

The second shell or outer shell (S2) may be a graft component comprising units that are substantially the same, or the same as those in the poly(methyl methacrylate), in substantially the same, or the same ratios. Use of similar polymers or copolymers in the outer shell improves compatibility between the first impact modifier and the polymethyl methacrylate. The outer shell comprises, based on its total weight, 50 to 100 wt%, preferably 80 to 100 wt% of methyl methacrylate repeat units; and 0 to 50 wt%, preferably 0 to 20 wt% by weight of a copolymerizable vinyl monomer other than the methyl methacrylate. In order to improve the fluidity of the composition and further improve the mold-processability thereof, it is preferable to add 0.01 to 5 parts by weight of a mercaptan compound such as dodecyl mercaptan or octyl mercaptan to 100 parts by weight of the monomers for the graft component.

Examples of first impact modifiers are described, for example, in US 2013/0184375 (Kaneka). The first impact modifier can be a powder product with having a multi-layer structure which comprises butyl acrylate as a rubber component, such as M210 (produced by Kaneka), and the like.

The second impact modifier is also in the form of core/shell/shell (C/S1/S2) particles, generally having a particle size from 100 to 1000 nm, for example 150 to 500 nm. Such particles can be prepared by emulsion polymerization. In the second impact modifier, the core (C) may be a phase B, the first shell or inner shell (S1) may be a phase A, and the second shell or outer shell (S2) may be a phase B. In some embodiments the core has a glass transition temperature (Tg) of at least 10°C, preferably of at least 30°C. The glass transition temperature of the polymer can be determined in a known manner by differential scanning calorimetry (DSC), such as for example in accordance with ISO11357-2 (2013)..

The polymer of the core can comprise, based on its total weight, 50.0 to 99.9 wt%, or 60.0 to 99.9 wt%, or 75.0 to 99.9 wt%, preferably 80.0 to 99.0 wt%, particularly 85.0 to 99.0 wt% of (C₁₋₈ alkyl) methacrylate repeat units, preferably (C₁₋₄ alkyl) methacrylate repeat units, preferably more than 50 wt% of the units being derived from methyl methacrylate; and 0.0 to 40.0 wt%, or 0.0 to 24.9 wt%, or 1.0 to 29.9 wt% of (C₁₋₈ alkyl) acrylate repeat units, preferably (C₁₋₄ alkyl) acrylate repeat units; 0.1 to 2.0 wt% of crosslinking units, and 0.0 to 8.0 wt% of styrenic repeat units, where the percentages by weight give a total of 100% by weight.

Preferably the core comprises, based on its total weight, at least 50 wt%, at least 60 wt%, at least 80 wt%, or at least 90 wt% of methyl methacrylate repeat units. In an embodiment, the core in these C/S1/S2 particles comprises (except for the crosslinking agent) monomer units that are substantially the same, or the same as those in polymethyl methacrylate. When the polymethyl methacrylate is a copolymer, the core can comprise the same type of copolymer units in the same, or substantially the same weight ratios as the polymethyl methacrylate copolymer.

The first shell or inner shell (S1) may comprise a material of phase A. To provide a transparent composition, the phase A preferably has a refractive index within ±0.005 of the polymethyl methacrylate, more preferably within ±0.001 of the polymethyl methacrylate. The first shell can have a glass transition temperature below 30°C, preferably below 10°C, in particular in the range from 0 to -75°C.

The inner shell can comprise, based on its total weight, 80.0 to 97.9 wt% (C₃₋₈ alkyl) acrylate repeat units, (C₇₋₁₄ alkyl) methacrylate repeat units, or a combination comprising the foregoing; 0.1 to 2.5 wt% crosslinking repeat units; and 2.0 to 20.0 wt% of styrenic repeat units where the parts by weight give a total of 100.0 parts by weight. In an embodiment the elastomeric phase comprises a butyl acrylate rubber, preferably a butyl-acrylate-co-styrene.

The second shell or outer shell (S2) may be a material of phase B. The outer shell can have a glass transition temperature of at least 10°C, preferably at least 30°C.

The second shell comprises based on its total weight, 50.0 to 100.0 wt%, or 60.0 to 100.0 wt%, or preferably 75.0 to 100.0 wt%, in particular 85.0 to 99.5 wt% of methyl methacrylate repeat units; 0.0 to 40.0 wt%, preferably 0.0 to 25.0 wt%, in particular 0.1 to 15.0 wt%, of (C₂₋₂₀ alkyl) acrylate repeat units, preferably (C₂₋₁₂ alkyl) acrylate repeat units alkyl, more preferably (C₂₋₈ alkyl) acrylate repeat units; and 0.0 to 10.0 wt%, preferably 0.0 to 8.0 wt%, of styrenic repeat units, where the stated percentages by weight give a total of 100.0% by weight.

As described above, the outer shell (S2) comprises a majority (greater than 50 weight percent (wt%)) of units derived from methyl methacrylate. In some embodiments, the outer shell comprises greater than 60 wt%, or greater than 70 wt%, or greater than 80 wt% of methyl methacrylate units. Preferably, the second shell comprises monomer units that are substantially the same, or the same as those in the polymethyl methacrylate, in substantially the same ratios. For example, the material of the second shell of the second impact modifier may be the same as the material of the poly(methyl methacylate). For example, the material of the second shell of the second impact modifier is poly(methyl methacrylate). For example, the material of the second shell of the second impact modifier is poly(methyl metacrylate) homopolymer and the poly(methyl methacrylate) is also a poly(methyl methacrylate) homopolymer.

In the second impact modifier, the relative weight ratios of the core and shells can be varied to achieve the desired impact properties. For example, the weight ratio of C:S1:S2 can be 5-60:10-90:5-70, or 5-40:20-70:10-50, or 10-30:40-60:10-40, wherein the ratio totals 100. In other embodiments the weight ratio of C:S1:S2 can be 5-50:20-75:1-50, or 25-45:36-60:5-40; or 30-40:35-55:10-30, wherein the ratio totals 100. In still other embodiments the weight ratio of C:S1:S2 can be 10-40:20-80:10-40, or 20-30:40-60:20:30 wherein the ratio totals 100.

More particularly, the second impact modifier comprises:
- 5.0-60.0 wt% of a core;
- 10.0-90.0 wt% of a first shell; and
- 5.0-70.0 wt% of a second shell;
wherein the sum of the weights of the core, the first shell and the second shell equals 100 wt%.

Second impact modifiers that can be advantageously used are described, for example, in US 8722788 (Evonik); in US 7179852(Roehm GMBh), which describes a core comprising methyl methacrylate-allyl methacrylate-ethyl acrylate copolymer, a first shell (S1) comprising a butyl acrylate-styrene-allyl methacrylate copolymer, and a second shell (S2) comprising a methyl methacrylate and ethyl acrylate (EA) copolymer made using a weight ratio of MMA:EA of 96:4 ; in DE 41 36 993 (BASF AG), which discloses particles having a core comprising methyl methacrylate-allyl methacrylate-methyl acrylate copolymer, a first shell (S1) comprising a butyl acrylate-phenylethyl acrylate-allyl methacrylate-1,4-butanediol methacrylate copolymer, and a second shell (S2) comprising a methyl methacrylate and methyl acrylate copolymer made using a weight ratio of MMA:MA of 96:4; and the multi-shell impact modifiers commercially available under the trade name METABLEN^{®} IR-441 from Mitsubishi; and the like.

In addition to the poly(methyl methacrylate) and the impact modifier composition, the polymer compositions can include various additives ordinarily incorporated into polymer compositions of this type, with the proviso that the additive(s) are selected so as to not significantly adversely affect the desired properties of the polymer compositions, in particular impact strength and transparency. Possible additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. In general, the additives are used in the amounts generally known to be effective. For example, the total amount of the additives (other than any filler or reinforcing agents) can be 0.01 to 5 wt%, based on the total weight of polymer compositions.

A combination of additives can be used, for example a combination of a heat stabilizer, mold release agent, ultraviolet light stabilizer, and an antioxidant.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS^{™} 168. Heat stabilizers are generally used in amounts of 0.01 to 5 wt%, based on the total weight of the composition, excluding any filler. There is considerable overlap among plasticizers, lubricants, and mold release agents, which include, for example, glycerol tristearate (GTS), phthalic acid esters (e.g, octyl-4,5-epoxy-hexahydrophthalate), tris-(octoxycarbonylethyl)isocyanurate, tristearin, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g, alkyl stearyl esters, such as, methyl stearate, stearyl stearate, and the like), waxes (e.g, beeswax, montan wax, paraffin wax, or the like), or combinations comprising at least one of the foregoing plasticizers, lubricants, and mold release agents. These are generally used in amounts of 0.01 to 5 wt%, based on the total weight of the polymer compositions, excluding any filler.

Light stabilizers, in particular ultraviolet light absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of the polymer compositions, excluding any filler.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidenebisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants can include a primary antioxidant, which is the antioxidant reacting with oxygen in the composition, and a secondary antioxidant which regenerates the primary antioxidant after the primary antioxidant has been oxidized. Antioxidants can be used in amounts of 0.01 to 0.5 wt%, based on the total weight of the polymer compositions, excluding any filler.

The polymer compositions can additionally comprise other polymers in order to modify its properties, provided that that the polymer(s) are selected so as to not significantly adversely affect the desired properties of the composition, in particular impact strength and transparency. Among these are polyacrylonitriles, polystyrenes, polyethers, polyesters, polycarbonates, and polyvinyl chlorides. A copolymer or combination comprising at least one of the foregoing polymers can be used. In some embodiments, polymers other than the polymethyl methacrylate and the impact modifier composition are present in an amount of less than 20 wt%, less than 10 wt%, or less than 5 wt%. In some embodiments no polymers other than the polymethyl methacrylate and the impact modifier composition are present..

The polymer compositions can be manufactured by methods known in the art. For example, powdered PMMA, impact modifiers or other optional components are first blended, optionally with fillers in a HENSCHEL-Mixer^{®} high speed mixer. Other low shear processes, such as hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared can be one-fourth inch long or less as desired. Such pellets can be used for subsequent molding, shaping, or forming. The compositions so formed can be in the form of a fully miscible blend, or having some degree of phase separation. Preferably, the blend is fully miscible, to achieve greater transparency.

The polymer composition can comprise 60 to 95 wt% of PMMA and 5 to 40 wt% of the impact modifier composition, based on the total weight of PMMA and impact modifier. Most preferably, the polymer composition can comprise 70 to 90 wt% of PMMA and 10 to 30 wt% of the impact modifier composition, based on the total weight of PMMA and impact modifier.

The polymer compositions can have a haze of less than 60%, preferably less than 40%, more preferably less than 25%, more preferably less than 15%, even more preferably less than 10%, most preferably less than 7%, and even as low as 1-2 percent as measured by ASTM D1003-00 on a plaque having a thickness of 3.2 mm.

The polymer compositions can have a total transmittance of greater than 50%, more preferably greater than 70%, more preferably greater than 80%, and most preferably greater than 85%, as measured by ASTM D1003-00 on a plaque having a thickness of 3.2 mm.

The polymer compositions can have an impact strength of at least 20 J/m², more preferably at least 25 J/m², and most preferably at least 30 J/m² as determined as the Izod impact strength according to ASTM D256-10, measured at +23°C on a molded sample of 3.2 mm thickness.

The polymer compositions can have a tensile strength at break of at least 30 MPa, or at least 50 MPa, or at least 60 MPa, as determined according to ASTM D638.

The impact-modified PMMA compositions can have a secant modulus of at least 1800 MPa, or at least 2500 MPa, or at least 3000 MPa.

It is preferred that a shaped sample of the polymer composition according the invention has one or more of:
- a total transmittance of at least 70%, alternatively ≥ 85% as measured using a 3.2 millimeter-thick molded sample in accordance with ASTM D1003-00;
- a haze of less than 30%, alternatively less than 7%, as measured using a 3.2 millimeter-thick molded sample in accordance with ASTM D1003-00;
- a notched Izod impact strength of at least 20 J/m², alternatively of at least 30 J/m², as determined according to ASTM D256-10 measured at +23°C on a molded bar of 3.2 mm thickness;
- a tensile strength at break of at least 30 MPa, alternatively at least 60 MPa, as determined according to ASTM D638-10; or
- a secant modulus of at least 1800 MPa, alternatively at least 300 MPa, as determined according to ASTM D638-10.

The polymer compositions according to the invention can be formed into articles by methods known in the art, for example injection molding, extruding, rotational molding, blow molding, thermoforming, and the like. Shaped, formed, or molded articles comprising the polymer compositions are also provided. Some examples of articles include shatterresistant panels for building and vehicle windows, skylights, signs and displays, and safety barriers. Other articles include medical implants, components of lighting fixtures, ornaments, home appliances, and the like.

### EXAMPLES

The invention will now be illustrated by the following non-limiting examples.

Compositions were prepared using a PMMA (Plexiglass-7H from Evonik) with or without an impact modifier or impact modifier composition.

The impact modifiers were (1) a white, particulate, opaque multilayer impact modifier comprising as the core a multilayer acrylic rubber, and as the shell an acrylic copolymer comprising primarily methyl methacrylate (approximate particle diameter: 200-250 nm) (IM-1; obtained from Kaneka under the designation M-210); and (2) translucent to opaque chunks of a multilayer impact modifier comprising a PMMA core, a butyl acrylate-co-styrene inner shell, and a PMMA outer shell (IM-2; obtained from Mitsubishi under the designation METABLEN^{®} IR-441). In addition, each composition further comprised an organo phosphite antioxidant (AO-1) and a sterically hindered phenolic antioxidant (AO-2) .

Properties were determined using the test methods shown in Table 1. Unless otherwise specified, all test methods are those in effect as of the filing date of this application.

**Table 1**

| Test | Test method | Sample, conditions | Units |
|---|---|---|---|
| Notched Izod Impact (NII) | ASTM-D256-10 | Molded bar, 3.2 mm thick, 23°C | J/m² |
| Tensile strength at yield | ASTM-D638 | Molded bar, 3.2 mm bar thickness, speed 50 mm/min, at 23°C | MPa |
| Tensile Strength at break | ASTM-D638 | Molded bar, 3.2 mm bar thickness, speed 50 mm/min, at 23°C | MPa |
| Tensile Elongation at break | ASTM-D638 | Molded bar, 3.2 mm bar thickness, speed 50 mm/min, at 23°C | % |
| Secant Modulus | ASTM-D638 | Molded bar, 3.2 mm bar thickness, speed 50 mm/min, at 23°C | MPa |
| Total Transmittance | ASTM-D1003 | Molded plaque, 3.2 mm thick | % |

### Examples 1-10

The PMMA was dried at 75°C for 4 hours. A blend of the impact modifiers, if more than one impact modifier was to be used, was prepared separately. The dried PMMA was then combined with the appropriate amounts of impact modifiers(s) and antioxidants, and mixed as a physical dry blend using a high speed mixer. The dry blend was then processed in a Thermo Fisher PTW24/40 MC high shear twin screw extruder over a processing melt temperature range of 220-250°C at 200 rpm screw speed, with an L/D of 40 (under the conditions shown in Table 2) to obtain the PMMA composition in pellet form. The injection molding temperature was 240-280°C and the mold temperature was 40-60°C.

**Table 2.**

| Zone 1 Feed | Zone 2 | Zone 3 | Zone 4 | Zone 5 | Zone 6 | Zone 7 | Zone 8 | Zone 9 Vacuum | Zone 10 |
|---|---|---|---|---|---|---|---|---|---|
| 150 | 210 | 230 | 230 | 240 | 240 | 245 | 245 | 250 | 250 |

The impact-modified PMMA compositions were dried at 80°C before molding. Test specimens are molded on an injection-molding machine over a temperature range of 200-240°C. The compositions and physical testing results are shown in Table 3.

**Table 3**

| | Ex1 | Ex2 | Ex3 | Ex4 | Ex5 | Ex6 | Ex7 | Ex8 | Ex9 | Ex10 |
|---|---|---|---|---|---|---|---|---|---|---|
| Composition, wt.% | | | | | | | | | | |
| PMMA | 89.90 | 89.90 | 89.90 | 79.90 | 79.90 | 79.90 | 59.90 | 59.90 | 59.90 | 99.90 |
| IM-1 (opaque, white) | 10.00 | 0.00 | 5.00 | 20.00 | 0.00 | 10.00 | 40.00 | 0.00 | 20.00 | 0.00 |
| IM-2 (translucent) | 0.00 | 10.00 | 5.00 | 0.00 | 20.00 | 10.00 | 0.00 | 40.00 | 20.00 | 0.00 |
| AO-1 | 0.08 | 0.08 | 0.08 | 0.08 | 0.08 | 0.08 | 0.08 | 0.08 | 0.08 | 0.08 |
| AO-2 | 0.02 | 0.02 | 0.02 | 0.02 | 0.02 | 0.02 | 0.02 | 0.02 | 0.02 | 0.02 |

| Properties | | | | | | | | | | |
|---|---|---|---|---|---|---|---|---|---|---|
| Notched Izod, J/m² | 15.09 | 14.01 | 21.86 | 26.4 | 25.25 | 34.22 | 38.02 | 47.72 | 53.2 | 13.92 |
| Tensile Strength at yield, MPa | 72.28 | 70.34 | 75.8 | 66.2 | 63.18 | 62.09 | 54.82 | 54.9 | 45.42 | - |
| Tensile Strength at break, MPa | 48.12 | 46.42 | 64.76 | 45.84 | 48.6 | 51.94 | 47.14 | 47.74 | 39.58 | 80.34 |
| Tensile Elongation at yield, % | 5.28 | 5.52 | 5.1 | - | 5.9 | 4.99 | 5.34 | 4.3 | 5.46 | - |
| Secant Modulus, MPa | 2522 | 2368 | 3359 | 2260 | 2220 | 2749 | 2406 | 2436 | 1914 | 3066 |
| Total Transmittance, % | 93 | 92 | 91 | 92 | 92 | 91 | 92 | 91 | 91 | 93 |

Examples 1,2,4,5,7,8 and 10 are included for comparative purposes. Examples 3, 6 and 9 reflect the present invention.

The above presented results show that an impact modifier composition comprising the combination of both IM-1 and IM-2 results in significant synergy in the improvement of impact resistance of the impact modified PMMA compositions. In particular, PMMA containing 10 wt% of the impact modifier composition (Example 3) shows approximately a 50% increase in impact resistance compared with either 10 wt% of IM-1 alone (Example 1) or 10 wt% of IM-2 alone (Example 2).

Similarly, PMMA with 20 wt% of the impact modifier composition (Example 6) shows approximately a 50% increase in impact resistance compared with either 20 wt% of IM-1 alone (Example 4) or 20 wt% of IM-2 alone (Example 5).

At higher loadings of impact modifier, the effect is reduced, but still synergistic. Thus, a polymer with 40 wt% of the impact modifier composition (Example 9) shows an approximately 40% increase in impact resistance compared with 40 wt% IM-1 alone (Example 7), and approximately a 13% increase in impact resistance compared with 40% IM-2 alone (Example 8). All of the polymers with impact modifier show improved impact resistance compared with unmodified PMMA (Example 10), and the impact strength increases as the percentage of impact modifier in the final PMMA increases.

The results further show that an impact modifier composition comprising the combination of both IM-1 and IM-2 results in significant synergy in the improvement of secant modulus of the final PMMA polymers, but only at lower loadings of the impact modifier. Thus, a polymer with 10 wt% of the impact modifier composition (Example 3) shows approximately a 40% increase in secant modulus compared with either 10 wt% IM-1 alone (Example 1) or 10 wt% IM-2 alone (Example 2). A polymer with 20 wt% of the impact modifier composition (Example 6) shows approximately a 15% increase in secant modulus compared with either 20 wt% IM-1 alone (Example 4) or 20 wt% IM-2 alone (Example 5). But at higher loadings of impact modifier, the impact modifier composition shows no beneficial effect on secant modulus. Thus, a polymer with 40 wt% of the impact modifier composition (Example 9) shows approximately a 17% decrease in secant modulus compared with either 40 wt% IM-1 alone (Example 7) or 40 wt% IM-2 alone (Example 8). All of the polymers with impact modifier show decreased secant modulus compared with unmodified PMMA (Example 10), except for the polymer with 10 wt% of the impact modifier composition (Example 3).

As shown in Table 3, the transmittance and therefore transparency of the final PMMA polymers is mostly retained upon the addition of individual impact modifiers or the impact modifier composition. The PMMA polymers containing the impact modifier compositions (examples 3, 6, and 9) show lower transmittance than polymer containing similar % of individual impact modifiers, but the effect is small. Thus, the impact modifier composition allows production of PMMA with significantly improved impact strength and retained transparency.

In general, the other physical test results show no degradation in properties with use of the impact modifier composition. Some tests, such as the flexural strength and flexural modulus tests, show a general decrease in desirable properties as the percent of impact modifiers (individual or combination) in the final PMMA polymer increases. Thus, the choice of the amount of the impact modifier composition used in PMMA depends on balancing the need for higher impact strength with the need for retaining other properties such as flexural strength.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

"(Meth)acryl compounds" as used herein includes compounds having a methacryl (H₂C=CH(CH₃)C(=O)- or acryl (H₂C=CH(CH₃)C(=O)-groups, and which is inclusive of (meth)acrylate esters, (meth)acrylic acids, (meth)acrylate salts, (meth) acrylamides, and (meth)acrylonitrile.

One or a combination of styrene, alpha-methyl styrene, (C1-4 alkyl)-substituted styrene are referred to collectively herein as "styrenic compounds," which can be polymerized to provide styrenic units.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Substantially similar" as used herein means that the amounts of each monomer are within ±10% of each other, preferably ±5% of each other.

The terms "a" and "an" do not denote a limitation of quantity, but rather denote the presence of at least one of the referenced item. The term "or" means "and/or" unless clearly indicated otherwise by context. The terms "first," "second," and the like, "primary," "secondary," and the like, as used herein do not denote any order, quantity, or importance, but rather are used to distinguish one element from another. The term "combination" is inclusive of blends, mixtures, alloys, reaction products, and the like. Unless defined otherwise, technical and scientific terms used herein have the same meaning as is commonly understood by one of skill in the art to which this invention belongs.

## Claims

1. Polymer composition comprising:
• 60.0 to 95.0 weight percent of a poly(methyl methacrylate); and
• 5.0 to 40.0 weight percent of an impact modifier composition comprising a first impact modifier and a second impact modifier different from the first impact modifier;
wherein the amount of the poly(methyl methacrylate) and the impact modifier composition totals 100.0 weight percent
wherein
• the first impact modifier comprises a core which is surrounded by a first shell which in turn is surrounded by a second shell, wherein
• the core comprises a butyl acrylate polymer;
• the first shell comprises a butyl acrylate polymer; and
• the second shell comprises ≥ 50.0 wt% of a methyl methacrylate polymer with regard to the total weight of the second shell;
and
• the second impact modifier comprises a core which is surrounded by a first shell which in turn is surrounded by a second shell, wherein
• the core comprises a methyl methacrylate polymer;
• the first shell comprises a butyl acrylate polymer; and
• the second shell comprises ≥ 50.0 wt% of a methyl methacrylate polymer with regard to the total weight of the second shell.

2. Polymer composition according to claim 1 wherein the second impact modifier comprises:
• 5.0-60.0 wt% of a core;
• 10.0-90.0 wt% of a first shell; and
• 5.0-70.0 wt% of a second shell;
wherein the sum of the weights of the core, the first shell and the second shell equals 100 wt%.

3. Polymer composition according to any one of claims 1-2, wherein the methyl methacrylate polymer has a weight average molecular weight of 20,000 to 1,000,000 g/mol as determined in accordance with ASTM D5296-11.

4. Polymer composition according to any one of claims 1-3 wherein the weight ratio of the first impact modifier to the second impact modifier is from 0.5:1.0 to 2.0:1.0.

5. Polymer composition according to any one of claims 1-4, wherein the material of the second shell of the second impact modifier is the same as the material of the poly(methyl methacrylate).

6. A process for making the polymer composition of any one or more of claims 1-5, comprising melt blending poly(methyl methacrylate) with the impact modifier composition and optionally with other components at a temperature of 200 to 250°C in an extruder.

7. A shaped article comprising the polymer composition of any one or more of claims 1-5.

8. Shaped article according to claim 7, having one or more of:
• a total transmittance of at least 70% as measured using a 3.2 millimeter-thick molded sample in accordance with ASTM D1003-00;
• a haze of less than 30% as measured using a 3.2 millimeter-thick molded sample in accordance with ASTM D1003-00;
• a notched Izod impact strength of at least 20 J/m² as determined according to ASTM D256-10 measured at +23°C on a molded bar of 3.2 mm thickness;
• a tensile strength at break of at least 30 MPa as determined according to ASTM D638-10; or
• a secant modulus of at least 1800 MPa as determined according to ASTM D638-10.

## Patentansprüche

1. Polymerzusammensetzung, umfassend:
• 60,0 bis 95,0 Gewichtsprozent eines Poly(methylmethacrylats); und
• 5,0 bis 40,0 Gewichtsprozent einer Schlagmodifizierungszusammensetzung, umfassend ein erstes Schlagmodifizierungsmittel und ein zweites Schlagmodifizierungsmittel, das anders als das erste Schlagmodifizierungsmittel ist;
wobei die Menge des Poly(methylmethacrylats) und der Schlagmodifizierungszusammensetzung insgesamt 100,0 Gewichtsprozent ergibt,
wobei
• das erste Schlagmodifizierungsmittel einen Kern umfasst, der von einer ersten Schale umgeben ist, die wiederum von einer zweiten Schale umgeben ist, wobei
• der Kern ein Butylacrylatpolymer umfasst;
• die erste Schale ein Butylacrylatpolymer umfasst; und
• die zweite Schale ≥ 50,0 Gew.-% eines Methylmethacrylatpolymers in Bezug auf das Gesamtgewicht der zweiten Schale umfasst;
und
• das zweite Schlagmodifizierungsmittel einen Kern umfasst, der von einer ersten Schale umgeben ist, die wiederum von einer zweiten Schale umgeben ist, wobei
• der Kern ein Methylmethacrylatpolymer umfasst;
• die erste Schale ein Butylacrylatpolymer umfasst; und
• die zweite Schale ≥ 50,0 Gew.-% eines Methylmethacrylatpolymers in Bezug auf das Gesamtgewicht der zweiten Schale umfasst.

2. Polymerzusammensetzung nach Anspruch 1, wobei das zweite Schlagmodifizierungsmittel Folgendes umfasst:
• 5,0-60,0 Gew.-% eines Kerns;
• 10,0-90,0 Gew.-% einer ersten Schale; und
• 5,0-70,0 Gew.-% einer zweiten Schale;
wobei die Summe der Gewichte des Kerns, der ersten Schale und der zweiten Schale 100 Gew.-% gleicht.

3. Polymerzusammensetzung nach einem der Ansprüche 1-2, wobei das Methylmethacrylatpolymer ein gewichtsmittleres Molekulargewicht von 20.000 bis 1.000.000 g/mol hat, bestimmt gemäß ASTM D5296-11.

4. Polymerzusammensetzung nach einem der Ansprüche 1-3, wobei das Gewichtsverhältnis des ersten Schlagmodifizierungsmittels zu dem zweiten Schlagmodifizierungsmittel von 0,5:1,0 bis 2,0:1,0 ist.

5. Polymerzusammensetzung nach einem der Ansprüche 1-4, wobei das Material der zweiten Schale des zweiten Schlagmodifizierungsmittels gleich wie das Material des Poly(methylmethacrylats) ist.

6. Verfahren zum Herstellen der Polymerzusammensetzung nach einem oder mehreren der Ansprüche 1-5, umfassend Schmelzmischen von Poly(methylmethacrylat) mit der Schlagmodifizierungszusammensetzung und optional mit anderen Komponenten bei einer Temperatur von 200 bis 250 °C in einem Extruder.

7. Formteil, umfassend die Polymerzusammensetzung nach einem der Ansprüche 1-5.

8. Formteil nach Anspruch 7 mit einem oder mehreren aus Folgendem:
• einer Gesamtdurchlässigkeit von mindestens 70 %, gemessen unter Verwendung einer geformten Probe mit 3,2 Millimeter Dicke gemäß ASTM D1003-00;
• einer Trübung von weniger als 30 %, gemessen unter Verwendung einer geformten Probe mit 3,2 Millimeter Dicke gemäß ASTM D1003-00;
• einer Kerbschlagzähigkeit von mindestens 20 J/m², bestimmt gemäß ASTM D256-10, gemessen bei +23 °C an einer geformten Stange mit einer Dicke von 3,2 Millimeter;
• einer Bruchzugfestigkeit von mindestens 30 MPa, bestimmt gemäß ASTM D638-10; oder
• einem Sekantenmodul von mindestens 1800 MPa, bestimmt gemäß ASTM D638-10.

## Revendications

1. Composition de polymère comprenant :
• 60,0 à 95,0 pour cent en poids d'un poly(méthacrylate de méthyle) ; et
• 5,0 à 40,0 pour cent en poids d'une composition antichoc comprenant un premier antichoc et un second antichoc différent du premier antichoc ;
dans laquelle la quantité de poly(méthacrylate de méthyle) et de la composition antichoc totalise 100,0 pour cent en poids
dans laquelle
• le premier antichoc comprend un noyau qui est entouré d'une première enveloppe qui elle-même est entourée d'une seconde enveloppe, dans laquelle
• le noyau comprend un polymère d'acrylate de butyle ;
• la première enveloppe comprend un polymère d'acrylate de butyle ; et
• la seconde enveloppe comprend ≥50,0 % en poids d'un polymère de méthacrylate de méthyle vis-à-vis du poids total de la seconde enveloppe ;
et
• le second antichoc comprend un noyau qui est entouré d'une première enveloppe qui elle-même est entourée d'une seconde enveloppe, dans laquelle
• le noyau comprend un polymère de méthacrylate de méthyle ;
• la première enveloppe comprend un polymère d'acrylate de butyle ; et
• la seconde enveloppe comprend ≥50,0 % en poids d'un polymère de méthacrylate de méthyle vis-à-vis du poids total de la seconde enveloppe.

2. Composition de polymère selon la revendication 1 dans laquelle le second antichoc comprend :
• 5,0 à 60,0 % en poids d'un noyau ;
• 10,0 à 90,0 % en poids d'une première enveloppe ; et
• 5,0 à 70,0 % en poids d'une seconde enveloppe ;
dans laquelle la somme des poids du noyau, de la première enveloppe et de la seconde enveloppe est égale à 100 % en poids.

3. Composition de polymère selon l'une quelconque des revendications 1 à 2, dans laquelle la polymère de méthacrylate de méthyle a un poids moléculaire moyen en poids de 20 000 à 1 000 000 g/mol tel que déterminé conformément à la norme ASTM D5296-11.

4. Composition de polymère selon l'une quelconque des revendications 1 à 3 dans laquelle le rapport en poids entre le premier antichoc et le second antichoc est de 0,5:1,0 à 2,0:1,0.

5. Composition de polymère selon l'une quelconque des revendications 1 à 4, dans laquelle la matière de la seconde enveloppe du second antichoc est la même que la matière du poly(méthacrylate de méthyle).

6. Procédé de fabrication de la composition de polymère selon l'une quelconque ou plusieurs des revendications 1 à 5, comprenant le mélange à l'état fondu de poly(méthacrylate de méthyle) avec la composition antichoc et éventuellement avec d'autres composants à une température de 200 à 250 °C dans une extrudeuse.

7. Article mis en forme comprenant la composition de polymère selon une ou plusieurs des revendications 1 à 5.

8. Article mis en forme selon la revendication 7, ayant un ou plusieurs parmi :
• une transmittance totale d'au moins 70 % telle que mesurée à l'aide d'un échantillon moulé de 3,2 millimètres d'épaisseur conformément à la norme ASTM D1003-00 ;
• un trouble de moins de 30 % tel que mesuré à l'aide d'un échantillon moulé de 3,2 millimètres d'épaisseur conformément à la norme ASTM D1003-00 ;
• une résistance au choc Izod sur éprouvette entaillée d'au moins 20 J/m² telle que déterminée selon la norme ASTM D256-10 mesurée à +23 °C sur un barreau moulé de 3,2 mm d'épaisseur ;
• une résistance à la rupture d'au moins 30 MPa telle que déterminée selon la norme ASTM D638-10 ; ou
• un module sécant d'au moins 1800 MPa tel que déterminé selon la norme ASTM D638-10.
